# EUROPEAN PATENT SPECIFICATION

(11) **EP 4 604 020 B1**
(45) Date of publication and mention of the grant of the patent: **08.07.2026**
(21) Application number: 24167199.9
(22) Date of filing: 28.03.2024
(51) Int. Cl.: G06N 3/0495

(54) **APPARATUS AND METHOD FOR PROVIDING EXECUTION PLANS OF MULTIPLE MIXED-PRECISION DEEP LEARNING MODELS BASED ON MULTI-PRECISION NPU**
VORRICHTUNG UND VERFAHREN ZUR BEREITSTELLUNG VON AUSFÜHRUNGSPLÄNEN MEHRERER MIXED-PRÄZISIONS-DEEP-LEARNING-MODELLE AUF BASIS VON MULTIPRÄZISIONS-NPU
APPAREIL ET PROCÉDÉ POUR FOURNIR DES PLANS D'EXÉCUTION DE MULTIPLES MODÈLES D'APPRENTISSAGE PROFOND DE PRÉCISION MIXTE SUR LA BASE D'UNE NPU DE PRÉCISION MULTIPLE

(30) Priority: 13.02.2024 KR 20240020617
(43) Date of publication of application: 20.08.2025
(73) Proprietor: University Industry Foundation, Yonsei University (UIF), Seoul 03722 (KR)
(72) Inventor: PARK, Yongjun, Seoul 03722 (KR); JUNG, Kiung, Cheongju-si 28292 (KR)
(74) Representative: Germain Maureau

(56) References cited:
- STYLIANOS I VENIERIS ET AL: "NAWQ-SR: A Hybrid-Precision NPU Engine for Efficient On-Device Super-Resolution", ARXIV.ORG, CORNELL UNIVERSITY LIBRARY, 201 OLIN LIBRARY CORNELL UNIVERSITY ITHACA, NY 14853, 8 March 2023 (2023-03-08), XP091455417
- WEI HUANG ET AL: "OHQ: On-chip Hardware-aware Quantization", ARXIV.ORG, CORNELL UNIVERSITY LIBRARY, 201 OLIN LIBRARY CORNELL UNIVERSITY ITHACA, NY 14853, 5 September 2023 (2023-09-05), XP091606328
- RISSO MATTEO ET AL: "Precision-aware Latency and Energy Balancing on Multi-Accelerator Platforms for DNN Inference", 2023 IEEE/ACM INTERNATIONAL SYMPOSIUM ON LOW POWER ELECTRONICS AND DESIGN (ISLPED), IEEE, 7 August 2023 (2023-08-07), pages 1 - 6, XP034424254, DOI: 10.1109/ISLPED58423.2023.10244311
- SHRIVASTAVA AVIRAL ET AL: "Orchestrating Multiple Mixed Precision Models on a Shared Precision-Scalable NPU", 20 June 2024 (2024-06-20), pages 72 - 82, XP093200871, Retrieved from the Internet <URL:https://dl.acm.org/doi/pdf/10.1145/3652032.3657571>

## Description

### TECHNICAL FIELD

The present disclosure relates to execution planning technology for mixed-precision deep learning models and, more particularly, to technology for providing an execution plan of a mixed-precision deep learning model, which is intended to efficiently execute multiple mixed-precision deep learning models in a multi-precision NPU.

### BACKGROUND

A Neural Processing Unit (NPU) may refer to a processor optimized for deep learning algorithm operations, which may be said to be the core of artificial intelligence, and may be used to accelerate the learning and inference tasks of a neural network model. Unlike an existing central processing unit (CPU) and graphic processing unit (GPU), the NPU may be specialized for deep learning operations to efficiently perform related tasks.

Mixed-precision may refer to the representation precision of data, which is used when learning or inferring a deep learning model. Precision may be expressed in a bit number representing data, and may generally use single precision (float32) and half precision (float16). That is, the mixed-precision may refer to technology that reduces the computational workload of the deep learning model and optimizes memory usage by performing operations using both the single precision and the half precision during model learning and inference processes.

The mixed-precision deep learning model may correspond to a deep learning model that is built through mixed-precision-based training. The training process of the deep learning model may be executed on the NPU, and the multi-precision NPU may correspond to a hardware accelerator designed to efficiently support multiple precision operations that require different degrees of precision for model training.

The execution plan of the deep learning model on the NPU may refer to a plan for operation and resource allocation to execute the deep learning model, and may refer to a plan needed to ensure that the deep learning model can be efficiently executed on the NPU and achieve optimum performance. The execution plan may be established considering the structure of the given deep learning model, input data, available hardware resource, etc., and may include the execution order for each layer or operation, a data transfer method, the parallelization degree of operation, memory and storage allocation, etc.

### [Related Literature]

### [Patent Literature]

KR 10-2023-0099357 (2023.07. 04)
SHRIVASTAVA AVIRAL ET AL: "Orchestrating Multiple Mixed Precision Models on a Shared Precision-Scalable NPU",PROCEEDINGS OF THE 25TH ACM SIGPLAN/SIGBED INTERNATIONAL CONFERENCE ON LANGUAGES, COMPILERS, AND TOOLS FOR EMBEDDED SYSTEMS, 20 June 2024 (2024-06-20), pages 72-82, introduces algorithmic and system optimization techniques on mobile NPUs.

### SUMMARY

In view of the above, the present disclosure provides an apparatus and method for providing execution plans of multiple mixed-precision deep learning models based on a multi-precision NPU, which can provide the execution plans of the mixed-precision deep learning models to efficiently execute the multiple mixed-precision deep learning models on the multi-precision NPU. The invention is defined by the appended claims.

The present disclosure provides an apparatus for providing execution plans of multiple mixed-precision deep learning models based on a multi-precision NPU, the apparatus including a memory, and a processor electrically connected to the memory. The processor is configured to form a multi-precision Neural Processing Unit (NPU) including a processing element (PE) composed of multiple Micro-PEs, to generate multiple mixed-precision deep learning models that perform multiple precision operations requiring different degrees of precision in a model execution process, and to generate the execution plans for executing the multiple mixed-precision deep learning models on the multi-precision NPU.

The processor may generate the multiple mixed-precision deep learning models through Hardware-Aware Mixed-precision Quantization (HAWQ).

The processor may generate the execution plan to ensure efficient distribution of precision operations for each model, taking into account a structure and characteristics of the multiple mixed-precision deep learning models.

The processor may generate the execution plan to ensure efficient resource utilization while minimizing execution time of each of the multiple mixed-precision deep learning models using a dynamic programming method.

The processor may generate the execution plan as a result of applying the dynamic programming method based on a result of measuring execution times of all precision operations for each mixed-precision deep learning model through a pre-simulation method or an actual execution method.

The processor may dynamically allocate at least one Micro-PE that executes each of the multiple precision operations in a process of executing the multiple mixed-precision deep learning models according to the execution plan.

The processor may control precision operations of a model with high execution priority among the multiple mixed-precision deep learning models to be preferentially executed according to the execution plan.

The processor may dynamically adjust the execution plan by tracking and monitoring the execution time and resource usage for precision operations of each mixed-precision deep learning model.

The present disclosure provides a method for providing execution plans of multiple mixed-precision deep learning models based on a multi-precision NPU, the method being performed in a computing device including a memory, and a processor electrically connected to the memory, the method including forming a multi-precision Neural Processing Unit (NPU) including a processing element (PE) composed of multiple Micro-PEs, through the processor; generating multiple mixed-precision deep learning models that perform multiple precision operations requiring different degrees of precision in a model execution process, through the processor; and generating the execution plans for executing the multiple mixed-precision deep learning models on the multi-precision NPU, through the processor.

The generating the multiple mixed-precision deep learning models may include generating the multiple mixed-precision deep learning models through Hardware-Aware Mixed-precision Quantization (HAWQ).

The generating the execution plans may include generating the execution plan to ensure efficient distribution of precision operations for each model, taking into account a structure and characteristics of the multiple mixed-precision deep learning models.

The generating the execution plans may include generating the execution plan to ensure efficient resource utilization while minimizing execution time of each of the multiple mixed-precision deep learning models using a dynamic programming method.

The generating the execution plans may include generating the execution plan as a result of applying the dynamic programming method based on a result of measuring execution times of all precision operations for each mixed-precision deep learning model through a pre-simulation method or an actual execution method.

The generating the execution plans may include analyzing data dependency that occurs during the execution of each mixed-precision deep learning model and then optimizing the execution plan, taking into account the data dependency.

The generating the execution plans may include detecting errors and exceptions that occur during the execution of the mixed-precision deep learning model and adding processing plans for the detected errors and exceptions to the execution plan.

The method may further include dynamically allocating at least one Micro-PE that executes each of the multiple precision operations in a process of executing the multiple mixed-precision deep learning models according to the execution plan.

The present disclosure provides a computer-readable recording medium for storing a computer program, wherein the computer program, when executed by a processor, includes instructions for causing the processor to perform an operation including forming a multi-precision Neural Processing Unit (NPU) including a processing element (PE) composed of multiple Micro-PEs; generating multiple mixed-precision deep learning models that perform multiple precision operations requiring different degrees of precision in a model execution process; and generating the execution plans for executing the multiple mixed-precision deep learning models on the multi-precision NPU.

### ADVANTAGEOUS EFFECTS

The disclosed technology may have the following effects. However, since it does not mean that a specific embodiment should include all of the following effects or only the following effects, the scope of rights of the disclosed technology should not be understood as being limited thereto.

An apparatus and method for providing execution plans of multiple mixed-precision deep learning models based on a multi-precision NPU according to an embodiment of the present disclosure can provide the execution plans of the mixed-precision deep learning models to efficiently execute the multiple mixed-precision deep learning models on the multi-precision NPU.

Particularly, the present disclosure can execute mixed-precision deep learning models produced through other technologies as well as HAWQ without depending on mixed-precision deep learning models produced through HAWQ. Further, the present disclosure does not simply execute the mixed-precision deep learning models several times, but can simultaneously execute multiple mixed-precision deep learning models to achieve energy efficiency and fast execution time. The present disclosure is advantageous in that additional programs or hardware are not required to provide execution plans of the multiple mixed-precision deep learning models.

### BRIEF DESCRIPTION OF THE DRAWINGS

Fig. 1 is a diagram illustrating a system for providing an execution plan according to the present disclosure.
Fig. 2 is a diagram illustrating the system configuration of an execution plan providing apparatus of Fig. 1.
Fig. 3 is a diagram illustrating the functional component of a processor of Fig. 2.
Fig. 4 is a flowchart illustrating a method for providing execution plans of multiple mixed-precision deep learning models based on a multi-precision NPU according to the present disclosure.
Fig. 5 is a diagram illustrating the structure of a framework providing execution plans of multiple mixed-precision deep learning models based on a multi-precision NPU according to the present disclosure.
Fig. 6 is a diagram illustrating an embodiment of an execution plan according to the present disclosure.
Fig. 7 is a diagram illustrating another embodiment of an execution plan according to the present disclosure.
Fig. 8 is a diagram illustrating a difference in performance of the multi-precision NPU depending on the application of the execution plan according to the present disclosure.

### [National Research Development Project Supporting the Present Invention]

[Project Serial No.] 1711198587
[Project No.] 00277060
[Department] Ministry of Science and ICT
[Project Management (Professional) Institute] Institute of Information & communication Technology Planning & Evaluation
[Research Project Name] Artificial Intelligence Semiconductor SW Integrated Platform Technology Development
[Research Task Name] Open-edge AI Semiconductor Design and SW Platform Technology Development
[Project Performing Institute] Yonsei University
[Research Period] 2023.06.01 to 2024.02.29

### [National Research Development Project Supporting the Present Invention]

[Project Serial No.] 1711193986
[Project No.] 2020-0-01361-004
[Department] Ministry of Science and ICT
[Project Management (Professional) Institute] Institute of Information & communication Technology Planning & Evaluation
[Research Project Name] Information & Communication Broadcasting Research Development Project
[Research Task Name] Artificial Intelligence Graduate School Support Project (Yonsei University)
[Project Performing Institute] University Industry Foundation, Yonsei University
[Research Period] 2024.01.01 to 2024.12.31

### DETAILED DESCRIPTION

Specific structural or functional descriptions in the embodiments of the present disclosure introduced in this specification or application are only for description of the embodiments of the present disclosure. Further, since effects disclosed herein do not mean that a specific embodiment should include all or only the effects, the scope of the present disclosure should not be construed as being limited thereto.

Meanwhile, the meaning of terms described herein will be understood as follows.

It will be understood that, although the terms "first", "second", etc. may be used herein to distinguish one element from another element, these elements should not be limited by these terms. For instance, a first element discussed below could be termed a second element without departing from the teachings of the present disclosure. Similarly, the second element could also be termed the first element.

It will be understood that when an element is referred to as being "coupled" or "connected" to another element, it can be directly coupled or connected to the other element or intervening elements may be present therebetween. In contrast, it should be understood that when an element is referred to as being "directly coupled" or "directly connected" to another element, there are no intervening elements present. Other expressions that explain the relationship between elements, such as "between", "directly between", "adjacent to" or "directly adjacent to" should be construed in the same way.

In the present disclosure, the singular forms are intended to include the plural forms as well, unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

In each step, reference characters (e.g. a, b, c, etc.) are used for the convenience of description. The reference characters do not designate the order of the steps, and the steps may be performed in a different order unless the context clearly indicates otherwise. That is, the steps may be performed in the specified order, may be performed substantially simultaneously, or may be performed in a reverse order.

The present disclosure can be implemented as a computer-readable code on a computer-readable recording medium. The computer-readable recording medium includes all types of recording devices in which data readable by a computer system is stored. Examples of the computer-readable recording medium include ROM, RAM, CD-ROM, magnetic tape, floppy disk, an optical data storage device, etc. In addition, the computer-readable recording medium may be distributed in a computer system connected via a network, so that computer-readable codes may be stored and executed in a distributed manner.

Unless otherwise defined, all terms including technical and scientific terms used herein have the same meaning as commonly understood by one of ordinary skill in the art to which the present disclosure belongs. It will be further understood that terms used herein should be interpreted as having a meaning that is consistent with their meaning in the context of this specification and the relevant art and will not be interpreted in an idealized or overly formal sense unless expressly so defined herein.

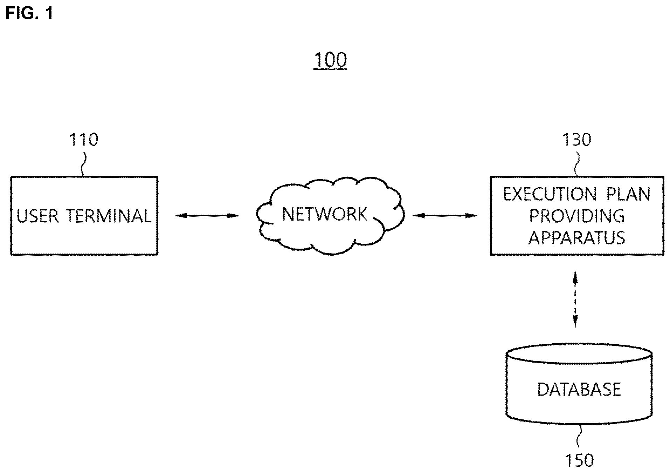

Fig. 1 is a diagram illustrating a system for providing an execution plan according to the present disclosure.

Referring to Fig. 1, the execution plan providing system 100 may include a user terminal 110, an execution plan providing apparatus 130, and a database 150.

The user terminal 110 may correspond to a computing device operated by a user. In this regard, a user may be an entity that executes and manages a model on a multi-precision NPU according to execution plans for multiple mixed-precision deep learning models. The user terminal 110 may be implemented as a smartphone, a laptop, or a computer, but may also be implemented as a variety of devices such as a tablet PC without being necessarily limited thereto. Further, the user terminal 110 may be implemented as a device forming the execution plan providing system 100 according to the present disclosure, and the execution plan providing system 100 may be implemented in various forms depending on the purpose of providing the execution plan.

The user terminal 110 may be connected to the execution plan providing apparatus 130 via a network, and multiple user terminals 110 may be simultaneously connected to the execution plan providing apparatus 130. The user terminal may install and execute a dedicated program or application for interworking with the execution plan providing apparatus 130.

The execution plan providing apparatus 130 may be implemented as a computer or server that performs a method for providing the execution plans of the multiple mixed-precision deep learning models based on the multi-precision NPU according to the present disclosure. In this regard, the method for providing the execution plans of the multiple mixed-precision deep learning models based on the multi-precision NPU according to the present disclosure may perform a series of processes for generating the execution plan when a user request for providing the execution plan is received from the user terminal 110, and may include a plurality of operation steps defined in the process of providing the resulting execution plan to the user terminal 110.

Further, the execution plan providing apparatus 130 may be connected to the user terminal 110 via a wired network or a wireless network such as Bluetooth, WiFi, or LTE, and may transmit and receive data with the user terminal 110 through the network. Further, the execution plan providing apparatus 130 may be implemented to operate in connection with an independent external system (not shown in Fig. 1). For example, the execution plan providing apparatus 130 may constitute the multi-precision NPU or be linked to the independent external system that generates the mixed-precision deep learning model, and may operate in conjunction with one or more external systems that independently perform one or more steps constituting the method according to the present disclosure without being necessarily limited thereto.

The database 150 may correspond to a storage device that stores various pieces of information required during the operation of the execution plan providing apparatus 130. The database 150 may store tools for configuring the multi-precision NPU, and store information for generating the mixed-precision deep learning model. However, without being necessarily limited thereto, the database may store information collected or processed in various forms while the execution plan providing apparatus 130 performs the method for providing the execution plans of the multiple mixed-precision deep learning models based on the multi-precision NPU according to the present disclosure.

Further, it is shown in Fig. 1 that the database 150 is independent from the execution plan providing apparatus 130. However, without being necessarily limited thereto, the database may be included as a logical storage device in the execution plan providing apparatus 130.

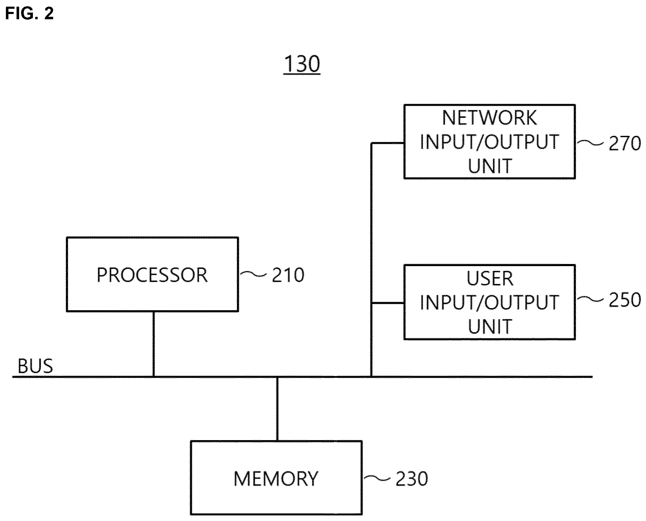

Fig. 2 is a diagram illustrating the system configuration of the execution plan providing apparatus of Fig. 1.

Referring to Fig. 2, the execution plan providing apparatus 130 may include a processor 210, a memory 230, a user input/output unit 250, and a network input/output unit 270.

The processor 210 may execute a procedure for providing the execution plans of the multiple mixed-precision deep learning models based on the multi-precision NPU according to an embodiment of the present disclosure, may manage the memory 230 that is read or written in this process, and may schedule synchronization time between a volatile memory and a non-volatile memory in the memory 230. The processor 210 may control the overall operation of the execution plan providing apparatus 130, and may be electrically connected to the memory 230, the user input/output unit 250, and the network input/output unit 270 to control data flow between them. The processor 210 may be implemented as a Central Processing Unit (CPU) or a Graphics Processing Unit (GPU) of the execution plan providing apparatus 130. In an embodiment, the processor 210 may be implemented to operate in conjunction with one or more multi-precision NPUs.

The memory 230 may include an auxiliary memory that is implemented as the non-volatile memory such as a Solid State Disk (SSD) or a Hard Disk Drive (HDD) and is used to store all data required for the execution plan providing apparatus 130, and may include a main memory that is implemented as the volatile memory such as a Random Access Memory (RAM). Further, the memory 230 may be executed by the electrically connected processor 210 to store a set of instructions that execute the method for providing the execution plans of the multiple mixed-precision deep learning models based on the multi-precision NPU according to the present disclosure.

The user input/output unit 250 may include an environment for receiving user input and an environment for outputting specific information to the user, and may include, for example, an input device including an adapter such as a touch pad, a touch screen, an onscreen keyboard, or a pointing device, and an output device including an adapter such as a monitor or a touch screen. In an embodiment, the user input/output unit 250 may correspond to a computing device connected through a remote connection. In such a case, the execution plan providing apparatus 130 may be performed as an independent server.

The network input/output unit 270 may provide a communication environment for connection to the user terminal 110 through a network, and may include an adapter for communication such as, for example, a Local Area Network (LAN), a Metropolitan Area Network (MAN), a Wide Area Network (WAN), and a Value Added Network (VAN). Further, the network input/output unit 270 may be implemented to provide short-range communication functions such as WiFi and Bluetooth or wireless communication functions of 4G or higher for wireless transmission of data.

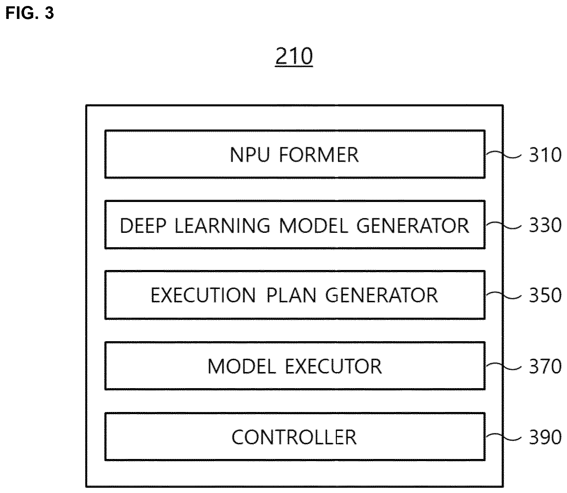

Fig. 3 is a diagram illustrating the functional component of the processor of Fig. 2.

Referring to Fig. 3, the execution plan providing apparatus 130 may perform the method for providing the execution plans of the multiple mixed-precision deep learning models based on the multi-precision NPU according to the present disclosure. To this end, the processor 210 of the execution plan providing apparatus 130 may include multiple functional components. To be more specific, the processor 210 may include an NPU former 310, a deep learning model generator 330, an execution plan generator 350, a model executor 370, and a controller 390.

At this time, the processor 210 of the present disclosure does not need to include all of the above functional components at the same time. However, according to each embodiment, some of the above components may be omitted or some or all of the above components may be selectively included. Hereinafter, the operation of each functional component will be described in detail.

The NPU former 310 may form a multi-precision Neural Processing Unit (NPU) including a processing element (PE) composed of multiple Micro-PEs. In this regard, the multi-precision NPU may correspond to a hardware device specialized for performing deep learning and artificial neural network operations. Particularly, the multi-precision NPU may be implemented with an optimized structure to efficiently process matrix operations performed during model learning and inference processes and operations requiring various degrees of precisions. To be more specific, the multi-precision NPU may be composed of multiple PEs, each PE may be composed of one or more Micro-PEs, and the performance and function of the NPU may be determined based on a structure between the processing element and the Micro-PE.

Further, the processing element may correspond to one of key components of the multi-precision NPU, and may process major operations and calculations. The processing element may be designed to generate an operation result after performing a specified operation on input data. Further, the Micro-PE may correspond to a smaller unit forming the processing element, and may be designed to perform small and simple operations. The Micro-PE may be used to perform operations such as multiplication, addition, and activation functions, and the operations of the Micro-PEs may be combined to form the function of the processing element. That is, the Micro-PE is an independent sub-unit within the processing element, and may be used to improve the parallel processing and flexibility of the processing element.

Further, the NPU former 310 may provide an interface for forming the multi-precision NPU, and the interface may be designed to allow a user to define the operation of the multi-precision NPU by setting various settings and parameters. That is, the user may input configuration information about the multi-precision NPU, and the configuration information may include information such as characteristics of tasks to be executed by the NPU, operation precision, and memory allocation. The NPU former 310 may analyze the nature of task requested by the user and the requirements for necessary resources based on the configuration information input by the user and then reflect the nature and the requirements in the configuration of the NPU, and may configure the multi-precision NPU, including details of hardware resources and algorithms required for the NPU to perform the task.

The deep learning model generator 330 may generate multiple mixed-precision deep learning models that perform a plurality of precision operations that require different degrees of precision in the model execution process. The mixed-precision deep learning model may correspond to the deep learning model configured by mixing several types of precision operations, and may be designed to include different degrees of precision and detailed conditions depending on the characteristics of the operation. The precision operation may be classified according to the expression precision of the data used in the operation, and operations requiring high precision may require more operation resources at the expense of producing more accurate results. For example, 32-bit floating point operations may require less precision than 64-bit floating point operations.

Further, the deep learning model generator 330 may analyze the structure of the model and the characteristics of each operation. Thereby, the deep learning model generator 330 may identify the precision required for each operation and distinguish between an operation that requires high precision and an operation that may use low precision. Further, the deep learning model generator 330 may generate mixed-precision deep learning models by allowing each operation to use a data type of corresponding precision based on the precision of the identified operation. Meanwhile, the deep learning model generator 330 may operate in conjunction with the user terminal 110, and may generate multiple mixed-precision deep learning models based on configuration information set by the user.

In an embodiment, the deep learning model generator 330 may generate multiple mixed-precision deep learning models through Hardware-Aware Mixed-precision Quantization (HAWQ). That is, the deep learning model generator 330 may generate a model with minimized execution time and memory usage while maintaining model accuracy by performing additional optimization operations based on a given model or a model configured by the user. To this end, the deep learning model generator 330 may use HAWQ. Of course, without being necessarily limited thereto, the mixed-precision deep learning model may be generated not only through HAWQ but also through other technologies. Herein, a detailed description of HAWQ is omitted, and the model optimization process may include the process of adjusting and quantizing the operation of each layer with optimal precision.

The execution plan generator 350 may generate the execution plan for executing the multiple mixed-precision deep learning models on the multi-precision NPU. To this end, the execution plan generator 350 may analyze the hardware structure of the multi-precision NPU and the structure and operation characteristics of the mixed-precision deep learning models. For example, the execution plan generator 350 may extract information about the operation amount, memory requirements, and operation type of each model, and extract information about the operation speed and resource constraints of the NPU. The execution plan generator 350 may generate an optimal execution strategy based on the analysis result. At this time, the execution strategy may include the method of efficiently utilizing the resource of the multi-precision NPU to execute the multiple mixed-precision deep learning models in parallel. Further, the execution plan generator 350 may allocate resources within the NPU to process the operation of each model and schedule the operations according to the generated execution strategy. Through this process, the execution plan generator may minimize the overall execution time and maximize resource utilization by arranging the operations of each model according to the optimal execution order.

In an embodiment, the execution plan generator 350 may generate the execution plan to ensure efficient distribution of the precision operations of each model, taking into account the structure and characteristics of each of the multiple mixed-precision deep learning models. The execution plan generator 350 may determine the operation type required by each model, the parallelization possibility of operation, and memory requirements, etc., based on the model structure and characteristics, and may generate an efficient distribution strategy for the precision operations of each model by determining whether to parallelize operations between multiple models, memory access, etc. The execution plan generator 350 may generate the execution plan including the order, precision, and resource allocation of operations used when each model is executed based on the distribution strategy. That is, the execution plan generator 350 may establish the efficient distribution strategy for precision operation and generate the execution plan, taking into account the structure and characteristics of each mixed-precision deep learning model.

In an embodiment, the execution plan generator 350 may generate the execution plan to ensure efficient resource utilization while minimizing the execution time of each of the multiple mixed-precision deep learning models using a dynamic programming method. In this regard, the dynamic programming method is an algorithm design technique for solving optimization problems. This may correspond to a method of dividing a problem into a plurality of sub-problems depending on the input size and generating the correct answer to the entire problem based on the correct answer to each sub-problem. To be more specific, the execution plan generator 350 may define resource allocation and scheduling problems required to perform each precision operation for each mixed-precision deep learning model as partial problems. The execution plan generator 350 may generate and combine the correct answers to sub-problems based on each calculation step of the mixed-precision deep learning model. Once all operation steps are completed, an optimal execution plan may be created to ensure efficient resource utilization while minimizing execution time based on all operation steps.

In an embodiment, the execution plan generator 350 may generate the execution plan as the result of applying the dynamic programming method based on the results of measuring the execution times of all precision operations for each mixed-precision deep learning model through a pre-simulation method or an actual execution method. The execution plan generator 350 may selectively apply the pre-simulation method or the actual execution method to generate the optimal execution plan. At this time, the execution times of precision operations may be measured differently depending on the method used, and the execution plan generator 350 may apply the dynamic programming method by reflecting errors in execution time according to the selected method.

In an embodiment, the execution plan generator 350 may detect errors and exceptions that occur during the execution of the mixed-precision deep learning model and add processing plans for the detected errors and exceptions to the execution plan. For example, during the operation of the model, overflow may occur for very large values or underflow may occur for very small values. This may affect the numerical stability of the model. In this case, the execution plan generator 350 may add the processing plan for limiting the range of values using a method such as normalizing values to the execution plan. As another example, NaN (Not a Number) values may occur due to incorrect operation or data loss during model operation, and the execution plan generator 350 may add the processing plan, such as replacing the NaN value with another value or stopping the corresponding operation, to the execution plan.

In an embodiment, the execution plan generator 350 may analyze data dependency that occurs during the execution of each mixed-precision deep learning model and optimize the execution plan, taking into account the data dependency. In this regard, the data dependency may correspond to a case where the result of one operation affects another operation. In the case of the deep learning model, each operation may be performed on input data, and data dependency may exist between the operations. For example, the data dependency may occur between operations when the output of one operation is used as input to another operation.

To be more specific, the execution plan generator 350 may determine data dependency between operations by analyzing the structure of the mixed-precision deep learning model to be executed. That is, the execution plan generator 350 may analyze data dependency from a connection relationship between the input and output of each operation. The execution plan generator 350 may generate a dependency graph expressing the data dependency between operations. The dependency graph may represent a data flow between operations in the model by expressing each operation as a node and data dependency as an edge. Further, the execution plan generator 350 may optimize the generated execution plan by applying various techniques based on the generated dependency graph. For example, the execution plan generator 350 may apply techniques such as minimizing data loading and storage, configuring a bundle of operations that may be executed in parallel, or minimizing data movement between operations, thus optimizing the execution plan and improving the processing speed.

The model executor 370 may dynamically allocate at least one Micro-PE that executes each of multiple precision operations in the process of executing multiple mixed-precision deep learning models according to the execution plan. The model executor 370 may dynamically allocate the Micro-PE that processes operation execution, taking into account the type, precision, priority, etc. of each operation specified in the execution plan. The model executor 370 may determine the precision operation to be executed according to the execution plan and allocate one or more Micro-PEs based on the type of the operation and the required precision. At this time, the model executor 370 may determine the number of the Micro-PEs allocated, taking into account the order of operations and the number of operations that may be simultaneously executed. Further, the model executor 370 may manage the Micro-PE allocated in the operation execution process, monitor the status of the model and resources, and reallocate or release the resources as needed.

In an embodiment, the model executor 370 may control precision operations of a model with high execution priority among multiple mixed-precision deep learning models to be preferentially executed according to the execution plan. That is, the model executor 370 may manage priority among multiple models according to the execution plan, determine the execution order of operations for each model according to execution priority, and adjust the execution priority of the model, taking into account changes in execution status and resource status. For example, when a new model is added or the status of the executing model is changed unlike the execution plan, the model executor 370 may readjust the execution priority and manage the execution plan according to an environment that is different from the creation time of the execution plan.

In an embodiment, the model executor 370 may dynamically adjust the execution plan by tracking and monitoring the execution time and resource usage for the precision operations of each mixed-precision deep learning model. The model executor 370 may track various precision operations required by each mixed-precision deep learning model and measure the execution time of each operation. Further, the model executor 370 may monitor the resource usage of each operation by tracking and quantifying the memory and calculation resources used in the operation process of each model. When an operation with a long execution time or an operation with high resource consumption is detected, the model executor 370 may control the execution plan to maintain optimal performance or minimize resource consumption. The model executor 370 may store tracked information and dynamic adjustment results in the database 150, and then the collected information may be used in the process of generating the execution plans for the mixed-precision deep learning models.

The controller 390 may control the overall operation of the processor 210, and manage the control flow or data flow between the NPU former 310, the deep learning model generator 330, the execution plan generator 350, and the model executor 370.

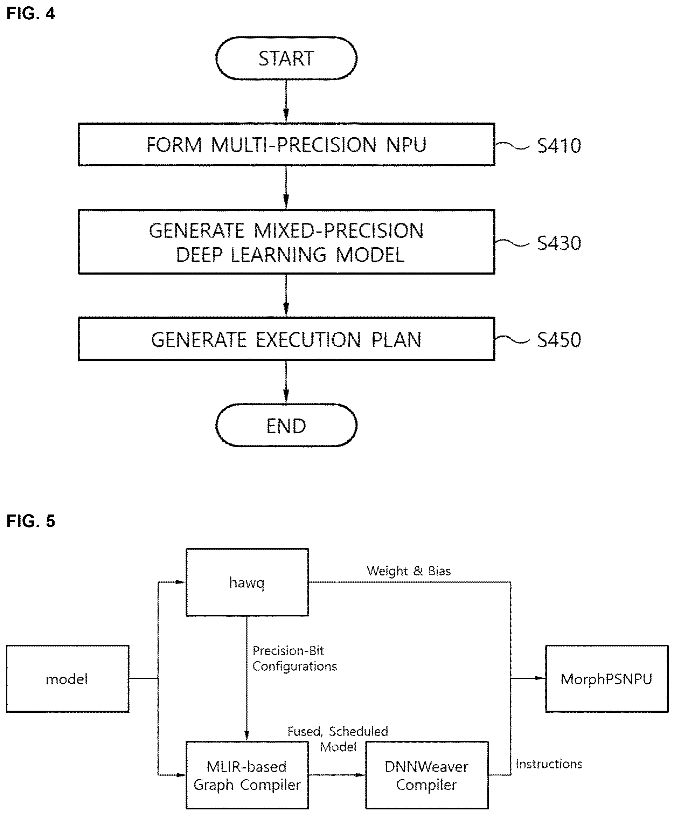

Fig. 4 is a flowchart illustrating a method for providing execution plans of multiple mixed-precision deep learning models based on a multi-precision NPU according to the present disclosure.

Referring to Fig. 4, the execution plan providing apparatus 130 may process a series of operational steps to perform a method for providing the execution plan through the processor 210. To be more specific, the execution plan providing apparatus 130 may form the multi-precision Neural Processing Unit (NPU) including the processing element (PE) composed of the multiple Micro-PEs through the processor 210 (step S410). The execution plan providing apparatus 130 may generate multiple mixed-precision deep learning models that perform a plurality of precision operations, each requiring different degrees of precision, during the model execution process through the processor 210 (step S430). The execution plan providing apparatus 130 may generate the execution plan for executing the multiple mixed-precision deep learning models on the multi-precision NPU through the processor 210 (step S450).

Fig. 5 is a diagram illustrating the structure of a framework providing execution plans of multiple mixed-precision deep learning models based on a multi-precision NPU according to the present disclosure.

Referring to Fig. 5, the execution plan providing apparatus 130 may perform the operation of generating the mixed precision model through the HAWQ based on a given model. In this case, the operation is not dependent on HAWQ, which may be replaced by other techniques that provide a similar role. Subsequently, the execution plan providing apparatus 130 may perform the operation of generating the execution plan based on the generated mixed-precision model. The execution plan providing apparatus 130 may use open software called MLIR to perform the corresponding operation, but the present disclosure is not necessarily limited thereto. As a result, the execution plan providing apparatus 130 may efficiently execute the multiple mixed-precision models on the multi-precision NPU through the generated execution plan.

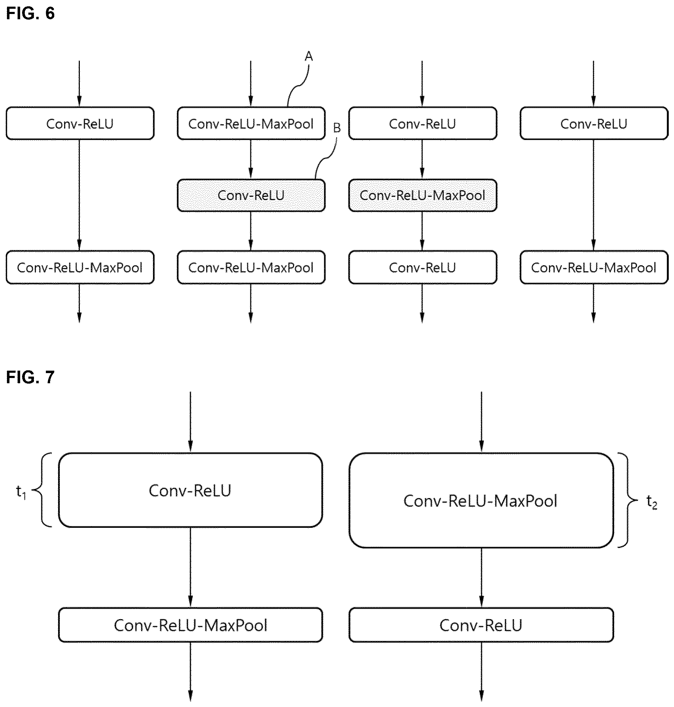

Fig. 6 is a diagram illustrating an embodiment of an execution plan according to the present disclosure, and Fig. 7 is a diagram illustrating another embodiment of an execution plan according to the present disclosure.

Referring to Figs. 6 and 7, the execution plan providing apparatus 130 may provide the execution plan that efficiently executes the multiple mixed-precision deep learning models on the multi-precision NPU. Particularly, the execution plan providing apparatus 130 may utilize the multi-precision NPU energy-efficiently and improve overall execution time by eliminating the idle time of one or more Micro-PEs.

In Fig. 6, the execution plan providing apparatus 130 generates the execution plan so that up to four operations (A) capable of low precision is simultaneously executed, and generates the execution plan so that up to two operations (B) requiring a medium level of precision may be simultaneously executed. The execution plan providing apparatus 130 generates an efficient execution plan by configuring a bundle of operations that is simultaneously executed to eliminate the idle time of the Micro-PE.

In Fig. 7, the vertical length of a rectangle may indicate the execution time (t1 and t2) of the corresponding operation, and the top two rectangles may take longer execution time compared to operations of the bottom two rectangles. That is, when configuring the bundle of operations that may be simultaneously executed, the execution plan providing apparatus 130 may prevent the idle time from increasing after the operation of a specific Micro-PE is first completed and before a subsequent operation is started by considering the execution time of each operation.

Consequently, the execution plan providing apparatus 130 may apply the techniques shown in Figs. 6 and 7 based on the framework shown in Fig. 5 to generate the execution plan that can quickly and energy-efficiently execute multiple mixed-precision models on the multi-precision NPU.

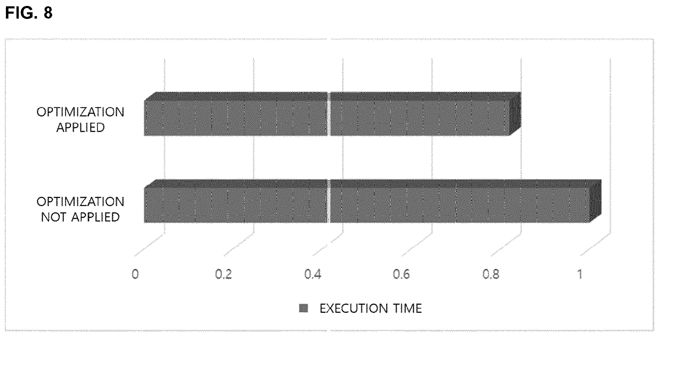

Fig. 8 is a diagram illustrating a difference in performance of the multi-precision NPU depending on the application of the execution plan according to the present disclosure.

Referring to Fig. 8, the x-axis of a graph may represent the execution time. As the x-axis length becomes shorter, it may indicate that multiple mixed-precision deep learning models have been more quickly executed. In addition, the x-axis of the graph may correspond to a normalized result based on 'no optimization applied'. That is, it can be seen in Fig. 8 that the multi-precision NPU can be more efficiently used by executing the multiple mixed-precision deep learning models according to the execution plan of the present disclosure.

To be more specific, in performance comparison experiments, eight types of mixed precision models containing various levels of precision and detailed conditions may be used, and a total of 12 types of mixed precision models may be used in combination.

As the result of the experiment, in the case of 'no optimization applied', the overall structure of each model in multiple mixed precision models is not understood, so it is not possible to construct a bundle of low precision operations that may be appropriately performed simultaneously. Thus, the idle time of the Micro-PE may result in inefficient resource use of the multi-precision NPU.

On the other hand, in the case of 'optimization application', the method according to the present disclosure is applied, and the idle time of the Micro-PE is eliminated by configuring an appropriate bundle of low-precision operations, resulting in efficient resource use of the multi-precision NPU. Thereby, the method according to the present disclosure can achieve a 1.2-fold improvement in average execution time.

### [Detailed Description of Main Elements]

| | | | |
|---|---|---|---|
| 100: | execution plan providing system | | |
| 110: | user terminal | 130: | execution plan providing apparatus |
| 150: | database | | |
| 210: | processor | 230: | memory |
| 250: | user input/output unit | 270: | network input/output unit |
| 310: | NPU former | 330: | deep learning model generator |
| 350: | execution plan generator | 370: | model executor |
| 390: | controller | | |

## Claims

1. An apparatus for providing execution plans of multiple mixed-precision deep learning models based on a multi-precision NPU, the apparatus comprising:
a memory (230); and
a processor (210) electrically connected to the memory,
wherein the processor is configured to:
form a multi-precision Neural Processing Unit, NPU, including a processing element, PE, composed of multiple Micro-PEs,
generate multiple mixed-precision deep learning models that perform multiple precision operations requiring different degrees of precision in a model execution process, and
generate the execution plans for executing simultaneously the multiple mixed-precision deep learning models on the multi-precision NPU.

2. The apparatus of claim 1, wherein the processor generates the multiple mixed-precision deep learning models through Hardware-Aware Mixed-precision Quantization, HAWQ.

3. The apparatus of claim 1, wherein the processor generates the execution plan to ensure efficient distribution of precision operations for each model, taking into account a structure and characteristics of the multiple mixed-precision deep learning models.

4. The apparatus of claim 1, wherein the processor generates the execution plan to ensure efficient resource utilization while minimizing execution time of each of the multiple mixed-precision deep learning models using a dynamic programming method.

5. The apparatus of claim 4, wherein the processor generates the execution plan as a result of applying the dynamic programming method based on a result of measuring execution times of all precision operations for each mixed-precision deep learning model through a pre-simulation method or an actual execution method.

6. The apparatus of claim 1, wherein the processor dynamically allocates at least one Micro-PE that executes each of the multiple precision operations in a process of executing the multiple mixed-precision deep learning models according to the execution plan.

7. The apparatus of claim 6, wherein the processor controls precision operations of a model with high execution priority among the multiple mixed-precision deep learning models to be preferentially executed according to the execution plan.

8. The apparatus of claim 6, wherein the processor dynamically adjust the execution plan by tracking and monitoring the execution time and resource usage for precision operations of each mixed-precision deep learning model.

9. A computer-implemented method for providing execution plans of multiple mixed-precision deep learning models based on a multi-precision NPU, the method being performed in a computing device including a memory; and a processor electrically connected to the memory, the method comprising:
forming a multi-precision Neural Processing Unit, NPU, including a processing element, composed of multiple Micro-PEs, through the processor;
generating multiple mixed-precision deep learning models that perform multiple precision operations requiring different degrees of precision in a model execution process, through the processor; and
generating the execution plans for executing simultaneously the multiple mixed-precision deep learning models on the multi-precision NPU, through the processor.

10. The method of claim 9, wherein the generating the multiple mixed-precision deep learning models comprises generating the multiple mixed-precision deep learning models through Hardware-Aware Mixed-precision Quantization, HAWQ.

11. The method of claim 9, wherein the generating the execution plans comprises generating the execution plan to ensure efficient distribution of precision operations for each model, taking into account a structure and characteristics of the multiple mixed-precision deep learning models.

12. The method of claim 9, wherein the generating the execution plans comprises generating the execution plan to ensure efficient resource utilization while minimizing execution time of each of the multiple mixed-precision deep learning models using a dynamic programming method.

13. The method of claim 12, wherein the generating the execution plans comprises generating the execution plan as a result of applying the dynamic programming method based on a result of measuring execution times of all precision operations for each mixed-precision deep learning model through a pre-simulation method or an actual execution method.

14. The method of claim 9, wherein the generating the execution plans comprises analyzing data dependency that occurs during the execution of each mixed-precision deep learning model and then optimizing the execution plan, taking into account the data dependency.

15. The method of claim 9, wherein the generating the execution plans comprises detecting errors and exceptions that occur during the execution of the mixed-precision deep learning model and adding processing plans for the detected errors and exceptions to the execution plan.

16. The method of claim 9, further comprising:
dynamically allocating at least one Micro-PE that executes each of the multiple precision operations in a process of executing the multiple mixed-precision deep learning models according to the execution plan.

17. A computer-readable recording medium for storing a computer program, wherein the computer program, when executed by a processor, comprises instructions for causing the processor to perform an operation comprising:
forming a multi-precision Neural Processing Unit, NPU, including a processing element, PE, composed of multiple Micro-PEs;
generating multiple mixed-precision deep learning models that perform multiple precision operations requiring different degrees of precision in a model execution process; and
generating the execution plans for executing simultaneously the multiple mixed-precision deep learning models on the multi-precision NPU.

## Patentansprüche

1. Vorrichtung zum Bereitstellen von Ausführungsplänen mehrerer Deep-Learning-Modelle mit gemischter Präzision basierend auf einer Multipräzisions-NPU, wobei die Vorrichtung umfasst:
einen Speicher (230); und
einen Prozessor (210), der elektrisch mit dem Speicher verbunden ist,
wobei der Prozessor für Folgendes konfiguriert ist:
Bilden einer multipräzisen neuronalen Verarbeitungseinheit, NPU, die ein Verarbeitungselement, PE, enthält, das aus mehreren Mikro-PEs besteht,
Erzeugen mehrerer Deep-Learning-Modelle mit gemischter Präzision, die mehrere Präzisionsoperationen durchführen, die unterschiedliche Präzisionsgrade in einem Modellausführungsprozess erfordern, und
Erzeugen der Ausführungspläne für die gleichzeitige Ausführung der mehreren Deep-Learning-Modelle mit gemischter Präzision auf der Multipräzisions-NPU.

2. Vorrichtung nach Anspruch 1, wobei der Prozessor die mehreren Deep-Learning-Modelle mit gemischter Präzision durch Hardware-Aware Quantization, HAWQ, mit gemischter Präzision erzeugt.

3. Vorrichtung nach Anspruch 1, wobei der Prozessor den Ausführungsplan erzeugt, um eine effiziente Verteilung von Präzisionsoperationen für jedes Modell sicherzustellen, wobei eine Struktur und Merkmale der mehreren Deep-Learning-Modelle mit gemischter Präzision berücksichtigt werden.

4. Vorrichtung nach Anspruch 1, wobei der Prozessor den Ausführungsplan erzeugt, um eine effiziente Ressourcennutzung sicherzustellen und gleichzeitig die Ausführungszeit jedes der mehreren Deep-Learning-Modelle mit gemischter Präzision unter Verwendung eines dynamischen Programmierverfahrens zu minimieren.

5. Vorrichtung nach Anspruch 4, wobei der Prozessor den Ausführungsplan als Ergebnis der Anwendung des dynamischen Programmierverfahrens basierend auf einem Ergebnis der Messung der Ausführungszeiten aller Präzisionsoperationen für jedes Deep-Learning-Modell mit gemischter Präzision durch ein Vorsimulationsverfahren oder ein tatsächliches Ausführungsverfahren erzeugt.

6. Vorrichtung nach Anspruch 1, wobei der Prozessor dynamisch mindestens ein Mikro-PE zuweist, das jede der mehreren Präzisionsoperationen in einem Prozess ausführt, bei dem die mehreren Deep-Learning-Modelle mit gemischter Präzision gemäß dem Ausführungsplan ausgeführt werden.

7. Vorrichtung nach Anspruch 6, wobei der Prozessor Präzisionsoperationen eines Modells mit hoher Ausführungspriorität unter den mehreren Deep-Learning-Modellen mit gemischter Präzision steuert, die bevorzugt gemäß dem Ausführungsplan ausgeführt werden sollen.

8. Vorrichtung nach Anspruch 6, wobei der Prozessor den Ausführungsplan dynamisch anpasst, indem er die Ausführungszeit und den Ressourcenverbrauch für Präzisionsoperationen jedes Deep-Learning-Modells mit gemischter Präzision verfolgt und überwacht.

9. Computerimplementiertes Verfahren zum Bereitstellen von Ausführungsplänen mehrerer Deep-Learning-Modelle mit gemischter Präzision basierend auf einer Multipräzisions-NPU, wobei das Verfahren in einer Rechenvorrichtung durchgeführt wird, die einen Speicher und einen Prozessor enthält, der elektrisch mit dem Speicher verbunden ist, wobei das Verfahren umfasst:
Bilden einer multipräzisen neuronalen Verarbeitungseinheit, NPU, die ein Verarbeitungselement, PE, enthält, das aus mehreren Mikro-PEs besteht, durch den Prozessor;
Erzeugen mehrerer Deep-Learning-Modelle mit gemischter Präzision, die mehrere Präzisionsoperationen durchführen, die unterschiedliche Präzisionsgrade in einem Modellausführungsprozess erfordern, durch den Prozessor; und
Erzeugen der Ausführungspläne für die gleichzeitige Ausführung der mehreren Deep-Learning-Modelle mit gemischter Präzision auf der Multipräzisions-NPU durch den Prozessor.

10. Verfahren nach Anspruch 9, wobei das Erzeugen der mehreren Deep-Learning-Modelle mit gemischter Präzision das Erzeugen der mehreren Deep-Learning-Modelle mit gemischter Präzision durch Hardware-Aware Quantization, HAWQ, mit gemischter Präzision umfasst.

11. Verfahren nach Anspruch 9, wobei das Erzeugen der Ausführungspläne das Erzeugen des Ausführungsplans umfasst, um eine effiziente Verteilung von Präzisionsoperationen für jedes Modell sicherzustellen, wobei eine Struktur und Merkmale der mehreren Deep-Learning-Modelle mit gemischter Präzision berücksichtigt werden.

12. Verfahren nach Anspruch 9, wobei das Erzeugen der Ausführungspläne das Erzeugen des Ausführungsplans umfasst, um eine effiziente Ressourcennutzung sicherzustellen und gleichzeitig die Ausführungszeit jedes der mehreren Deep-Learning-Modelle mit gemischter Präzision unter Verwendung eines dynamischen Programmierverfahrens zu minimieren.

13. Verfahren nach Anspruch 12, wobei das Erzeugen der Ausführungspläne das Erzeugen des Ausführungsplans als Ergebnis der Anwendung des dynamischen Programmierverfahrens basierend auf einem Ergebnis der Messung der Ausführungszeiten aller Präzisionsoperationen für jedes Deep-Learning-Modell mit gemischter Präzision durch ein Vorsimulationsverfahren oder ein tatsächliches Ausführungsverfahren umfasst.

14. Verfahren nach Anspruch 9, wobei das Erzeugen der Ausführungspläne das Analysieren der Datenabhängigkeit, die während der Ausführung jedes Deep-Learning-Modells mit gemischter Präzision auftritt, und dann das Optimieren des Ausführungsplans unter Berücksichtigung der Datenabhängigkeit umfasst.

15. Verfahren nach Anspruch 9, wobei das Erzeugen der Ausführungspläne das Erkennen von Fehlern und Ausnahmen, die während der Ausführung des Deep-Learning-Modells mit gemischter Präzision auftreten, und das Hinzufügen von Verarbeitungsplänen für die erkannten Fehler und Ausnahmen zum Ausführungsplan umfasst.

16. Verfahren nach Anspruch 9, das ferner Folgendes umfasst:
dynamisch Zuweisen mindestens eines Mikro-PE, das jede der mehreren Präzisionsoperationen in einem Prozess ausführt, bei dem die mehreren Deep-Learning-Modelle mit gemischter Präzision gemäß dem Ausführungsplan ausgeführt werden.

17. Computerlesbares Aufzeichnungsmedium zum Speichern eines Computerprogramms, wobei das Computerprogramm, wenn es von einem Prozessor ausgeführt wird, Anweisungen umfasst, um den Prozessor dazu zu veranlassen, eine Operation auszuführen, die Folgendes umfasst:
Bilden einer multipräzisen neuronalen Verarbeitungseinheit, NPU, die ein Verarbeitungselement, PE, enthält, das aus mehreren Mikro-PEs besteht;
Erzeugen mehrerer Deep-Learning-Modelle mit gemischter Präzision, die mehrere Präzisionsoperationen durchführen, die unterschiedliche Präzisionsgrade in einem Modellausführungsprozess erfordern; und
Erzeugen der Ausführungspläne für die gleichzeitige Ausführung der mehreren Deep-Learning-Modelle mit gemischter Präzision auf der Multipräzisions-NPU.

## Revendications

1. Appareil pour fournir des plans d'exécution de multiples modèles d'apprentissage profond à précision mixte sur la base d'une NPU multi-précision, l'appareil comprenant :
une mémoire (230) ; et
un processeur (210) relié électriquement à la mémoire,
dans lequel le processeur est configuré pour :
former une Unité de Traitement Neuronal, NPU, multi-précision, comprenant un élément de traitement, PE, composé de multiples Micro-PE,
générer de multiples modèles d'apprentissage profond à précision mixte qui réalisent de multiples opérations de précision nécessitant différents degrés de précision dans un processus d'exécution de modèle, et
générer les plans d'exécution pour exécuter simultanément les multiples modèles d'apprentissage profond à précision mixte sur la NPU multi-précision.

2. Appareil selon la revendication 1, dans lequel le processeur génère les multiples modèles d'apprentissage profond à précision mixte par une Quantification à Précision Mixte Sensible au Matériel, HAWQ.

3. Appareil selon la revendication 1, dans lequel le processeur génère le plan d'exécution afin d'assurer une distribution efficace des opérations de précision pour chaque modèle, en tenant compte d'une structure et de caractéristiques des multiples modèles d'apprentissage profond à précision mixte.

4. Appareil selon la revendication 1, dans lequel le processeur génère le plan d'exécution afin d'assurer une utilisation efficace de ressources tout en minimisant le temps d'exécution de chacun des multiples modèles d'apprentissage profond à précision mixte en utilisant un procédé de programmation dynamique.

5. Appareil selon la revendication 4, dans lequel le processeur génère le plan d'exécution à la suite de l'application du procédé de programmation dynamique sur la base d'un résultat de mesure des temps d'exécution de toutes les opérations de précision pour chaque modèle d'apprentissage profond à précision mixte par un procédé de pré-simulation ou un procédé d'exécution réelle.

6. Appareil selon la revendication 1, dans lequel le processeur alloue dynamiquement au moins un Micro-PE qui exécute chacune des multiples opérations de précision dans un processus d'exécution des multiples modèles d'apprentissage profond à précision mixte selon le plan d'exécution.

7. Appareil selon la revendication 6, dans lequel le processeur commande les opérations de précision d'un modèle avec une priorité d'exécution élevée parmi les multiples modèles d'apprentissage profond à précision mixte pour être exécutées de manière préférentielle selon le plan d'exécution.

8. Appareil selon la revendication 6, dans lequel le processeur ajuste dynamiquement le plan d'exécution en suivant et en surveillant le temps d'exécution et l'utilisation de ressources pour les opérations de précision de chaque modèle d'apprentissage profond à précision mixte.

9. Procédé mis en œuvre par ordinateur pour fournir des plans d'exécution de multiples modèles d'apprentissage profond à précision mixte sur la base d'une NPU multi-précision, le procédé étant réalisé dans un dispositif informatique comprenant une mémoire ; et un processeur relié électriquement à la mémoire, le procédé comprenant :
une formation d'une Unité de Traitement Neuronal, NPU, multi-précision, comprenant un élément de traitement, PE, composé de multiples Micro-PE, par le processeur ;
une génération de multiples modèles d'apprentissage profond à précision mixte qui réalisent de multiples opérations de précision nécessitant différents degrés de précision dans un processus d'exécution de modèle, par le processeur ; et
une génération des plans d'exécution pour exécuter simultanément les multiples modèles d'apprentissage profond à précision mixte sur la NPU multi-précision, par le processeur.

10. Procédé selon la revendication 9, dans lequel la génération des multiples modèles d'apprentissage profond à précision mixte comprend la génération des multiples modèles d'apprentissage profond à précision mixte par Quantification à Précision Mixte Sensible au Matériel, HAWQ.

11. Procédé selon la revendication 9, dans lequel la génération des plans d'exécution comprend la génération du plan d'exécution afin d'assurer une distribution efficace des opérations de précision pour chaque modèle, en tenant compte d'une structure et de caractéristiques des multiples modèles d'apprentissage profond à précision mixte.

12. Procédé selon la revendication 9, dans lequel la génération des plans d'exécution comprend la génération du plan d'exécution afin d'assurer une utilisation efficace de ressources tout en minimisant le temps d'exécution de chacun des multiples modèles d'apprentissage profond à précision mixte en utilisant un procédé de programmation dynamique.

13. Procédé selon la revendication 12, dans lequel la génération des plans d'exécution comprend la génération du plan d'exécution à la suite de l'application du procédé de programmation dynamique sur la base d'un résultat de mesure des temps d'exécution de toutes les opérations de précision pour chaque modèle d'apprentissage profond à précision mixte par un procédé de pré-simulation ou un procédé d'exécution réelle.

14. Procédé selon la revendication 9, dans lequel la génération des plans d'exécution comprend une analyse d'une dépendance de données qui se produit pendant l'exécution de chaque modèle d'apprentissage profond à précision mixte et ensuite une optimisation du plan d'exécution, en tenant compte de la dépendance de données.

15. Procédé selon la revendication 9, dans lequel la génération des plans d'exécution comprend une détection d'erreurs et d'exceptions qui se produisent pendant l'exécution du modèle d'apprentissage profond à précision mixte et un ajout de plans de traitement pour les erreurs et les exceptions détectées au plan d'exécution.

16. Procédé selon la revendication 9, comprenant en outre :
une allocation dynamique d'au moins un Micro-PE qui exécute chacune des multiples opérations de précision dans un processus d'exécution des multiples modèles d'apprentissage profond à précision mixte selon le plan d'exécution.

17. Support d'enregistrement lisible par ordinateur pour stocker un programme informatique, dans lequel le programme informatique, lorsqu'il est exécuté par un processeur, comprend des instructions pour amener le processeur à effectuer une opération comprenant :
une formation d'une Unité de Traitement Neuronal, NPU, multi-précision, comprenant un élément de traitement, PE, composé de multiples Micro-PE ;
une génération de multiples modèles d'apprentissage profond à précision mixte qui réalisent de multiples opérations de précision nécessitant différents degrés de précision dans un processus d'exécution de modèle ; et
une génération des plans d'exécution pour exécuter simultanément les multiples modèles d'apprentissage profond à précision mixte sur la NPU multi-précision.
